(19) Europäisches Patentamt
European Patent Office
Office européen des brevets

(11) Veröffentlichungsnummer: **0 204 118**
**B1**

(12) **EUROPÄISCHE PATENTSCHRIFT**

(45) Veröffentlichungstag der Patentschrift: **06.06.90**

(51) Int. Cl.$^5$: **C 08 G 69/48**, C 08 K 5/29

(21) Anmeldenummer: **86105442.7**

(22) Anmeldetag: **19.04.86**

(54) **Mit Monoisocyanaten modifizierte Polyamide.**

(30) Priorität: **04.05.85 DE 3516089**

(43) Veröffentlichungstag der Anmeldung:
**10.12.86 Patentblatt 86/50**

(45) Bekanntmachung des Hinweises auf die Patenterteilung:
**06.06.90 Patentblatt 90/23**

(84) Benannte Vertragsstaaten:
**CH DE FR GB IT LI NL**

(56) Entgegenhaltungen:
**EP-A-0 043 928**
**FR-A-2 121 712**

(73) Patentinhaber: **BAYER AG**
**D-5090 Leverkusen 1 Bayerwerk (DE)**

(72) Erfinder: **Meyer, Rolf-Volker, Dr.**
**Buchheimer Strasse 23**
**D-4150 Krefeld (DE)**
Erfinder: **Merten, Josef, Dr.**
**Kruensend 30**
**D-4052 Korschenbroich (DE)**
Erfinder: **Dhein, Rolf, Dr.**
**Deswatinesstrasse 30**
**D-4150 Krefeld (DE)**
Erfinder: **Selbeck, Harald, Dr.**
**Erftweg 73**
**D-4105 Krefeld-Fischeln (DE)**

**EP 0 204 118 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Gegenstand der Erfindung sind schlagzähe Polyamidformmassen, die 0,5 bis 5 Gew.-% Monoisocyanat enthalten und die sich z.B. durch verbesserte Fließeigenschaften und/oder verbessertes Entformungsverhalten auszeichnen.

Die Schlagzähigkeit von Formkörpern aus Polyamiden hängt erheblich vom Wassergehalt der Formkörper ab. Im wasserfreien Zustand, z.B. nach der Herstellung der Formkörper durch Spritzgießen, sind besonders die aus leicht fließfähigen und damit leicht verarbeitbaren Polyamid-Spritzgußmassen mit mittleren Molekulargewichten und hier wiederum die aus hochkristallinen Polyamiden hergestellten Formkörper relativ empfindlich gegen Schlagbeanspruchung.

Höhermolekulare Polyamide, wie sie vorzugsweise für die Extrusionsverarbeitung eingesetzt werden, liefern zwar weniger schlagempfindliche Formkörper, sind jedoch infolge ihrer stark erhöhten Schmelzviskosität und der daraus resultierenden schlechteren Fließfähigkeit schwieriger zu verarbeiten.

Darüber hinaus erfordert die Herstellung höher viskoser Polyamide häufig eine teure und aufwendige Festphasennachkondensation.

Es besteht daher ein Bedarf nach rasch verarbeitbaren, leicht fließfähigen Polyamidformmassen, aus denen sich Formkörper herstellen lassen, die in trockenem Zustand eine erhöhte Schlagzähigkeit besitzen. Insbesondere sind solche Polyamide von Interesse, die hohe Zugfestigkeit und leichte Verarbeitbarkeit kombiniert mit einer hohen Schlagzähigkeit aufweisen.

Es sind bereits verschiedene Verfahren zur Erhöhung der Zähigkeit von Polyamiden bekannt, so z.B. das Einmischen von niedermolekularen Weichmachern in Polyamide, das aber aus mehreren Gründen keine zufriedenstellende Lösung des Problems bringt. Der größte Teil der für Kunststoffe geeigneten Weichmacher ist mit Polyamiden nicht genügend verträglich und entmischt sich beim Verarbeiten bzw. neigt zum Ausschwitzen. Verträgliche Weichmacher, die mit Polyamiden echte Lösungen bilden, verschlechtern aber meist die guten mechanischen Eigenschaften der Polyamide. Stark polare Stoffee mit niedrigem Molekulargewicht wie Wasser oder Dimethylformamid bewirken zwar eine Verbesserung der Zähigkeit. Sie können jedoch erst nach der Herstellung von Polyamidformkörpern in diese eingearbeitet werden, da sonst bei der Verarbeitung von entsprechend vorbehandelten Polyamidgranulaten wegen der relativ niederen Siedepunkte dieser Zusätze blasenhaltige Formkörper entstehen würden.

Auch Additive zur Verbesserung der Fließfähigkeit und des Entformungsverhaltens von Polyamid-Formkörpern sind lange bekannt.

So sind z.B. sowohl Amid- als auch Esterwachse zur Verbesserung des Entformungsverhaltens bekannt, die jedoch zu keiner besseren Fließfähigkeit führen. Als Entformunngsmittel werden auch anorg. Nucleierungsmittel verwendet, die aber in aller Regel die Kerbschlagzähigkeit von (teilkristallinen) Polyamiden verschlechtern und daher auch nur begrenzt Einsatz finden können.

Besonders effektiv als Entformungshilfsmittel und Fließverbesserer sind Ca-Salze langkettiger Carbonsäuren, vorzugsweise Ca-Stearat. Diese verursachen aber einen deutlichen Abbau des Molgewichts der Polyamide, der wiederum zu unerwünshter Minderung des Zähigkeitsniveaus führt.

Zur Herstellung von Polyamiden nach dem Verfahren der aktivierten, anionischen Polymerisation von Lactamen werden (Poly-isocyanate als "Aktivatoren" eingesetzt, die die Polymerisation erheblich beschleunigen. Besonders hochwertige Produkte erhält man mit (Poly)isocyanaten, die mindestens 2 NCO-Gruppen pro Molekül enthalten.

Aus der DE—OS—30 239 18 ist weiterhin bekannt, die Fließfähigkeit und Zähigkeit von Polyamiden zu verbessern, indem man in die Polyamidformmassen Oxicarbonylisocyanate von Polyethern einarbeitet.

Solche Modifikatoren sind aber kompliziert herstellbar, in der Lagerung anspruchsvoll und bringen nicht immer die erforderlichen Zähigkeitsverbesserungen.

In der FR—PS—21 21 712 ist der Zusatz von 0,25% Stearylisocyanat in Polyamiden im Vergleichsbeispiel erwähnt. Das Patent beansprucht den Zusatz von Diisocyanaten zu den Polyamiden. Monoisocyanate sind lt. Vergleichsbeispielen als Haftverminderer unwirksam, ja ergeben sogar eine Tendenz zum Kleben an der Form.

Überraschenderweise wurde nun gefunden, daß man Polyamidformmassen erhalten kann, die die obengenannten Nachteile nicht aufweisen, wenn man Polyamide, vorzugsweise teilkristalline Polyamide mit kleineren Mengen von Monoisocyanaten oder Monoisocyanat-Vorläufern, wie z.B. maskeirten Monoisocyanaten umsetzt, wobei je nach Wahl des Monoisocyanats Formmassen mit verbesserter Fließfähigkeit, besserer Entformung und/oder besserer Kerbschlagzähigkeit gewonnen werden.

Besonders überraschend ist, daß die übrigen Eigenschaften der Polyamide nicht negativ beeinflußt werden, sondern beispielsweise bei verbessertem Entformungsverhalten und erhöhter Fließfähigkeit das übliche Kerbschlagzähigkeitsniveau beibehalten werden kann.

Gegenstand der Erfindung sind daher thermoplastisch leicht verarbeitbare, schlagzähe Polyamidformmassen erhalten durch Einarbeiten von 0,5 bis 5 Gew.-%, vorzugsweise mit 0,5 bis 3 Gew.-%, bezogen auf die Gesamtmasse, mindestens eines organischen Monoisocyanates der allgemeinen Formel

R—NCO

wobei die Isocyanatgruppe direkt mit dem substituierten oder unsubstituierten Kohlenwasserstoffrest R verbunden ist, der mindestens 6, bevorzugt mindestens 10 C-Atome, enthält und vorzugsweise für einen (cyclo)-aliphatischen ($C_6$—$C_{50}$), araliphatischen ($C_7$—$C_{50}$) oder aromatischen ($C_6$—$C_{50}$)-Kohlenwasserstoffrest steht, wobei ein jeder der Reste an einer oder mehreren Stellen mindestens einfach substituiert, z.B. durch Halogene, vorzugsweise Chlor oder Brom, oder über Brückenglieder wie —O—, —S—, —CONH—, verbunden sein kann, vorzugsweise —O— und/oder —CONH—, in das Polyamid.

Besonders bevorzugt werden aliphatische Monoisocyanate mit mindestens 10 C-Atomen im Kohlenwasserstoffrest R oder aromatische Monoisocyanate, die am aromatischen Ring mindestens einen Substituenten mit mindestens $C_4$ enthalten, zur erfindungsgemäßen Modifizierung der Polyamide eingesetzt.

Beispiele für die genannten Monoisocyanate sind Hexyl-isocyanat, 6-Chlor-hexylisocyanat, n-Octylisocyanat, Cyclohexylisocyanat, e-Ethyl-hexylisocyanat, 2,3,4-Methylcyclohexylisocyanat, 3,3,5-Trimethylcyclohexylisocyanat, 2-Norbornyl-methylisocyanat, Decylisocyanat, Dodecylisocyanat, Tetradecylisocyanat, Hexadecylisocyanat, Octadecylisocyanat, 3-Butoxypropylisocyanat, 3-(2-Ethylhexyloxy)-propylisocyanat, Phenylisocyanat, Tolylisocyanate, Chlorphenylisocyanate (2,3,4-Isomere), Dichlorphenylisocyanate, 4-Nitrophenylisocyanat, 3-Trifluormethylphenylisocyanat, Benzylisocyanat, Dimethylphenylisocyanate (techn. Gemisch und Einzelisomere), 4-Dodecylphenylisocyanat, 4-Cyclohexylphenylisocyanat, 1-Naphthylisocyanat, Isocyanato-Amide aus 1 Mold Diisocyanaten und 1 Mol Monocarbonsäuren, vorzugsweise aus Toluylendiisocyanaten, Diphenylmethandiisocyanaten und Hexamethylendiisocyanat mit aliphatischen Monocarbonsäuren mit bevorzugt mindestens 6 C-Atomen, z.B. (6-Isocyanatohexyl)-stearinsäureamid, (3-Isocyanato- tolyl)-stearinsäureamid, (6-Isocyanatohexyl)-benzamid, jeweils allein oder im Gemisch mit mehreren Monoisocyanaten.

Bevorzugt einzusetzende Monoisocyanate sind Dodecylisocyanat, Tetradecylisocyanat, Octadecylisocyanat, das techn. Stearylisocyanat (Gemisch von $C_{12-18}$-Alkylisocyanaten), Nonyl-phenylisocyanate, Dodecylphenylisocyanate, (3-Isocyanatotolyl)-stearylamid und Chlorphenylisocyanate.

Als Polyamide im Sinne der Erfindung können lineare Polykondensate von Lactamen mit 4 bis 12 Kohlenstoffatomen bzw. übliche Polykondensate aus Diaminen und Dicarbonsäuren, wie 6,6-, 6,7-, 6,8-, 6-9, 6,10-, 6,12, 8,8-, 12,12-Polyamid, oder Polykondensate aus aromatischen Dicarbonsäuren wie Isophthalsäure, Terephthalsäure mit Diaminen wie Hexamethylendiamin, Octamethylendiamin, aus araliphatichen Ausgangsstoffen wie m- oder p-Xylylendiamin und Adipinsäure, Korksäure, Sebazinsäure und Polykondensate auf Basis von alicyclischen Ausgangsstoffen wie Cyclohexandicarbonsäure, Cyclohexandiessigsäure, Diamino-dicyclohexylmethanen, Isophorondiamin verwendet werden.

Gleichermaßen können Gemische der genannten Polyamide oder aus den genannten Bausteinen erhältliche Copolyamide Verwendung finden. Die Erweichungspunkte der Ausgangspolyamide sollen mindestens 150°C betragen. Vorzugsweise werden teilkristalline Polyamide verwendet.

Besonders bevorzugt werden die üblicherweise für techn. Spritzgußartikel eingesetzten 6,-, 6,6-, 6,9-, 6,10-, 6,12, 11- und 12-Polyamide verwendet sowie Copolyamide, die zum überwiegenden Anteil auf Basis der obengenannten Polyamide aufgebaut sind und deren relative Viskosität etwa 1,8 bis 5,0, vorzugsweise 2,0 bis 3,5, betragen soll (gemesen in 1%iger Lösung in m-Kresol bei 25°C).

Die erfindungsgemäß zu verwendenden Monoisocyanate werden zu 0,5 bis 5 Gew.-%, vorzugsweise zu 0,5 bis 3 Gew.-%, den Polyamiden zugesetzt.

Zur Herstellung der erfindungsgemäßen modifizierten Polyamide können die Polyamidkomponente und das Monoisocyanat oberhalb des Schmelzpunktes des Polyamids miteinander vermischt werden. Dies kann z.B. unmittelbar nach der Herstellung des Polyamids durch Vermischen des Modifikators mit der als Strang abzuspinnenden Schmelze erfolgen. Vorzugsweise werden die erfindungsgemäß modifizierten Polyamide durch Mischen der Ausgangskomponenten in üblichen Schneckenmaschinen hergestellt.

Dieses Verfahren wird insbesondere gewählt, wenn neben Polyamiden weitere Polymere zur Herstellung entsprechend modifizierter Polymerlegierungen eingesetzt werden oder andere Additive wie Stabilisatoren, Entformungsmittel, Gleitmittel, Kristallisationsbeschleuniger, Weichmacher, Pigmente, Farb-, Verstärkungs- und/oder Füllstoffe, wie Glasfasern, eingearbeitet werden sollen.

Bei der gewünschten Kombination mit anderen Additiven, die zur Reaktion mit Isocyanaten befähigte Gruppen tragen, z.B. viele Glasfaserschichten, kann es vorteilhaft oder sogar notwendig sein, die übrigen Additive in einem zweiten Arbeitsgang — getrennt von den Monoisocyanaten — einzuarbeiten.

Zur Compoundierung eignen sich übliche, bekannte Apparaturen. Doppelschneckenextruder werden bevorzugt eingesetzt.

Die erfindungsgemäß mit Monoisocyanaten modifizierten Polyamidformmassen sind zum großen Teil besonders leicht fließende Produkte, die sich in handelsüblichen Spritzgießmaschinen problemlos zu Formkörpern verarbeiten lassen. Sie ziechnen sich zum Teil zusätzlich durch verbesserte Kerbschlagzähigkeitswerte neben den sonst polyamidtypischen guten Gebrauchseigenschaften aus.

Viele Monoisocyanate fördern als Polyamid-Modifikator zusätzlich das Entformungsverhalten der Polyamide, so daß auf die Verwendung zusätzlicher Entformungshilfsmittel, die oft auch nachteilige Einflüsse auf die Gebrauchseigenschaften der Polyamide ausüben, mit Vorteil verzichtet werden kann.

Formkörper aus mit Monoisocyanaten modifizierten Polyamiden zeichnen sich schließlich auch durch eine sehr gute Oberflächenbeschaffenheit aus.

## BEISPIELE

### Beispiel 1

98 Gew.-Teile eines 6-Polyamids mit einer rel. Viskosität von 3,0, gemessen in 1%iger Lösung in m-Kresol bei 25°C, einer nach DIN 53 453 bestimmten Kerbschlagzähigkeit von 3,1 kJ/$m^2$ und einer Fließlänge von 52 cm und 2 Gew.-Teile n-Octadecylisocyanat werden getrennt mittels einer Dosierwaage bzw. einer Dosierpumpe und bei 260°C und 90 U/Min. extrudiert, die homogene Schmelze als Stränge in ein Wasserbad abgesponnen, granuliert und dann bei 80°C im Vakuum bis zu einem Wassergehalt von <0,05 Gew.-% getrocknet.

Das Produkt hat eine rel. Viskosität von 2,7, eine Kerbschlagzähigkeit von 4,5 kJ/$m^2$ und eine Fließlänge von 80 cm; d.h. bei wenig vermindertem Molgewicht und tendenziell erhöhter Kerbschlagzähigkeit hat sich die Fließfähigkeit als Maß für die Verarbeitbarkeit drastisch verbessert.

Die Fließlänge ist ein Maß für die Fließfähigkeit eines Produktes und damit für seine Verarbeitbarkeit; höhere Fließlänge bedeutet bessere Fließfähigkeit und damit kürzere Spritzcyclen.

Die Fließlänge wurde wie folgt bestimmt: In eine spezielles Werkzeug, das auf 90° gehalten wird, wird mittels einer Spritzgießmaschine, deren Zylindertemperatur 260°C beträgt, die zu untersuchende Probe mit einem Spritzdruck von 72 bar eingespritzt. Besonders leichtfließende Werkstoffe sind in der Lage, unter diesen Bedingungen das Werkzeug zu füllen, so daß man nachher eine 100 cm lange Spirale entnehmen Kann. Weniger fließfähige Werkstoffe füllen unter den beschriebenen Bedingungen das Werkzeug nur teilweise; dann können infolge der vorzeitigen Erstarrung der Schmelze nur Spiralkörper von <100 cm Länge erhalten werden.

Als Fließlänge wird die Lönge in cm angegeben, die 5-mal reproduziert wurde.

Zusätzlich ist die Enformbarkeit von Formteilen erheblich verbessert gegenüber der nicht modifizierten Vergleichsprobe.

### Beispiele 2—7

Die in Beispiel 1 beschriebene Versuchsdurchführung wird wiederholt, wobei die Menge und der Typ des zugesetzten Monoisocyanats variiert werden.

Die Zusammensetzung der Produkte sowie kennzeichnende Eigenschaften sind in Tabelle 1 zusammengefaßt.

### Beispiele 8—10

Die in Beispiel 1 beschriebene Versuchsdurchführung wird wiederholt mit "techn. Stearylisocyanat" (Additiv A) und verschiedenen Polyamiden.

Die Zusammensetzung der Produkte und kennzeichnende Eigenschaften sind in Tabelle 2 zusammengefaßt.

Tabelle 1: Modifizierung von 6-Polyamid ($\eta_{rel}$ = 2,9, Fließlänge = 52 cm) mit verschiedenen Monoisocyanat-Additiven (Summe der Gew.-Tle. = 100)

| Beispiel | Additiv Art*) | Additiv Menge | $\eta_{rel}$ | Produkteigenschaften: Kerbschlagzähigkeit $a_k$ ($kJ/m^2$) | Produkteigenschaften: Fließlänge cm | Produkteigenschaften: Entformungsdruck**) (MPa) |
|---|---|---|---|---|---|---|
| 2 | A | 2 | 2,7 | 4,5 | 81 | 0.5 |
| 3 | A | 1 | 2,8 | 4,1 | 75 | 0.7 |
| 4 | B | 2 | 2,9 | 4,1 | 72 | 0.6 |
| 5 | C | 2 | 2,9 | 4,5 | 72 | 0.5 |
| 6 | D | 2 | 2,5 | 4,2 | 73 | 1.0 |
| 7 | E | 2 | 2,7 | 4,4 | 80 | 1.0 |
| VV 1 | ohne | - | 2,9 | 3,4 | 52 | 1.5-9.0 (nicht entformbar) |

*) A: Gemisch geradzahliger Alkylisocyanate (ca. 55 % $C_{18}$, ca. 35 % $C_{16}$, ca. 10 % $C_{10}$-$C_{14}$)

B: 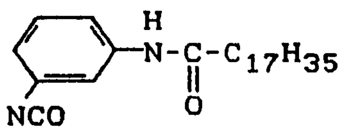

C: 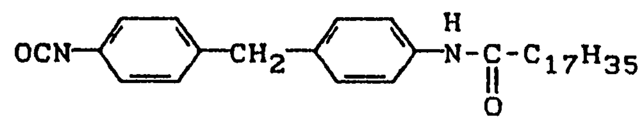

D: 3-Chlorphenylisocyanat
E: Benzylisocyanat

**) Erläuterung siehe Seite 13

**) Entformungsdruck

Der für die Güte der Entformbarkeit wichtige Entformungsdruck wurde wie folgt gemessen:

Die einzelnen Polyamidgranulate wurden unter definierter, konstanter Beibehaltung von Zylindertemperatur, Werkzeugtemperatur, Spritzdruck, Nachdruck, Einspritzzeit, Kühlzeit, Nachdruckzeit und Pausenzeit zu 20 zylinderförmigen "Entformungshülsen" verarbeitet.

Die angegebenen Werte des Entformungsdrucks sind das arithmetische Mittel aus 20 Zyklen.

Je niedriger der unter Standardbedingungen zum Auswurf der Prüfkörper erforderliche Entformungsdruck ist, umso leichter entformbar ist das entsprechende Produkt.

Für Polyamid-6-Präparate wurden dabei z.B. folgende Maschinendaten vorgegeben:

| | | | |
|---|---|---|---|
| Zylindertemp: | 250°C (270°C bei PA—6 + 30% Glasfaser) | | |
| Spritzdruck: | 60 MPa | | |
| Nachdruck: | 30 MPa | | |
| Zykluszeiten: | Einspritzzeit | 6,15 | sec. |
| | Kühlzeit | 10 | sec. |
| | Nachdruckzeit | 15 | sec. |
| | Pausenzeit | 3 | sec. |
| Werkzeugtemp.: | 110°C | | |

Tabelle 2: Modifizierung verschiedener Polyamide mit 2 Gew.-% Additiv A als Monoisocyanat

| Beispiel | Eingesetztes Polyamid | | | | | Additiv A wie in Bsp. 2 (Gew.-%) | Produkteigenschaften | | |
|---|---|---|---|---|---|---|---|---|---|
| | Typ | $\eta_{rel}$ | Gew.-% | $a_k$ ($kJ/m^2$) | Fließl. cm | | $\eta_{rel}$ | $a_k$ ($kJ/m^2$) | Fließl. cm |
| 8 | 6,6-PA | 3,0 | 98 | 2,5 | 65 | 2 | 2,7 | 3,6 | 77 |
| 9 | 6,9-PA | 3,5 | 98 | 3,9 | 45 | 2 | 3,5 | 5,6 | 65 |
| 10 | 6-PA | 3,9 | 98 | 4,2 | 32 | 2 | 3,6 | 5,2 | 45 |
| 11 | 6-PA | 2,9 | 98***) | 2,9 | 76 | 2 | 2,8 | 3,8 | 99 |

$a_k$ = Kerbschlagzähigkeit (bestimmt nach DIN 53 453)

***) enthält 1 % langkettigen Stearylester als Verarbeitungshilfsmittel

Beispiel 12

70 Gew.-Tle. des nach Beispiel 2 erhaltenen, modifizierten Polyamids werden mit 30 Gew.-Tlen. handelsüblicher Schnittglasfaser, durchschnittliche Länge 6 mm, Faserdurchmesser ca. 10 µ über getrennte Dosierwaagen gleichzeitig in einen Mischextruder gefördert und bei 270°C zu einem glasfaserhaltigen Polyamid compoundiert.

Die glasfaserhaltige Schmelze wird wie in Beispiel 1 beschrieben als Strang abgesponnen, granuliert und gut getrocknet.

Vergleich der Produkt-Kenndaten des so erhaltenen Produktes mit einem analogen, kein Additiv A enthaltenden, glasfaserverstärkten Polyamid (VV 2) zeigt folgende Unterschiede in den Verarbeitungsdaten:

Fließlänge 56 cm (VV 2: 43 cm)
Entformungsdruck 0,3 MPa (VV 2" 0,6 MPa)
Grenzklebetemperatur 189° (VV2: 168°)

Unter der Grenzklebetemperatur versteht man die Temperatur, bei der der Kurvenverlauf des von der Temperatur abhängigen, notwendigen Entformungsdrucks bei steigender Temperatur (80—200°) in den Steilanstieg übergeht (d.h. keine Entformung mehr durch Kleben an der Werkzeugwand).

Je höher diese Grenztemperatur ist, umso leichter sind die Produkte zu verarbeiten.

Vergleichsversuch 3

Ein gemäß Beispiel 12 hergestelltes glasfaserverstärktes 6-Polyamid, das anstatt des Additivs A 2 Gew.-% eines mit —OCO-NCO-Endgruppen terminierten Polyethylenglykols (Molgewicht ca. 1500) gemäß Beispiel 9 der DOS—3 023 918 enthält, hatte eine gegenüber dem unmodifizierten Produkt unveränderte Fließlänge (43 cm) und eine Grenzklebetemperatur von nur 164°.

**Patentansprüche**

1. Thermoplastisch leicht verarbeitbare, schlagzähe Polyamidformmassen, erhalten durch Einarbeiten von 0,5 bis 6 Gew.-%, bezogen auf die Gesamtmasse, wenigstens eines Monoisocyanates der allgemeinen Formel (I)

$$R—NCO \qquad (I)$$

oder entsprechend maskierter Monoisocyanate, in der die Isocyanatgruppe direkt mit dem substituierten oder unsubstituierten Kohlenwasserstoffrest R, der mindestens 6 C-Atome aufweist, verbunden ist, in das Polyamid.

2. Polyamidformmassen nach Anspruch 1, dadurch gekennzeichnet, daß in der allgemeinen Formel (I) R für einen (cyclo)aliphatischen $C_6$ bis $C_{50}$—Rest, einen araliphatischen $C_7$ bis $C_{50}$—Rest oder einen aromatischen Rest steht.

3. Polyamidformmassen nach mindestens einem der Ansprüche 1 und 2, dadurch gekennzeichnet, daß der Rest R an einer oder mehreren Stellen mindestens einfach substituiert, oder über die Brückenglieder —O—, —S—und/oder —CONH— verbunden ist.

4. Polyamidformmassen nach mindestens einem der Ansprüche 1 bis 3, dadurch gekennzeichnet, daß als Monoisocyanate aliphatische Monoisocyanate mit mindestens 10 C-Atomen oder aromatische Monoisocyanate, die am aromatischen Ring mindestens einen Substituenten mit mindestens 4 Kohlenstoffatomen enthalten, eingearbeitet werden.

5. Polyamidformmassen nach mindestens einem der Ansprüche 1 bis 4, dadurch gekennzeichnet, daß als Monoisocyanate chlorierte aromatische Monoisocyanate eingearbeitet werden.

6. Polyamidformmassen nach mindestens einem der Ansprüche 1 bis 4, dadurch gekennzeichnet, daß als Monoisocyanate Gemische von geradzahligen $C_{10}$ bis $C_{18}$-Alkylisocyanaten eingearbeitet werden.

7. Polyamidformmassen nach mindestens einem der Ansprüche 1 bis 6, dadurch gekennzeichnet, daß als Monoisocyanate Dodecylisocyanat, Stearylisocyant (Gemisch von $C_{12}$ bis $C_{18}$-Alkylisocyanaten), Nonylphenylisocyanate, Dodecylphenylisocyanate, (3-Isocyanatotolyl)-stearylamid, Chlorphenylisocyanate oder die Verbindung

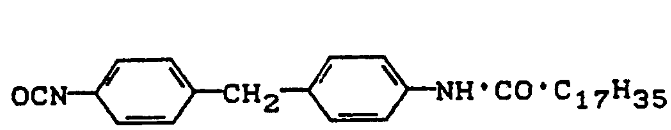

eingearbeitet werden.

8. Polyamidformmassen nach mindestens einem der Ansprüche 1 bis 7, dadurch gekennzeichnet, daß 0,5 bis 3 Gew.-% Monoisocyanate in das Polyamid eingearbeitet werden.

9. Polyamidformmassen nach mindestens einem der Ansprüche 1 bis 7, dadurch gekennzeichnet, daß als Polyamide Polyamid-6, 6,6, -6,9, -6,10, 6,12, -11 oder/und -12 sowie Copolyamide eingesetzt werden.

**Revendications**

1. Compositions de polyamides à mouler, résilientes (résistant bien aux chocs), faciles à transformer par voie thermoplastique, que l'on obtient en incorporant au polyamide de 0,5 à 5% en poids, sur la base de la composition totale, d'au moins un monoisocyanate de formule générale (I)

$$R—NCO \qquad (I)$$

ou de monoisocyanates masqués de façon correspondante, dans lequel ou lesquels le groupe isocyanate est relié directement au reste hydrocarboné R, substitué ou non substitué, qui présente au moins 6 atomes de carbone.

2. Compositions de polyamides à mouler selon la revendication 1, caractérisées en ce que, dans la formule générale (I), R représente un reste (cyclo)aliphatique en $C_6$ à $C_{50}$, un reste araliphatique en $C_7$ à $C_{50}$ ou un reste aromatique.

3. Compositions de polyamides à mouler selon l'une au moins des revendications 1 et 2, caractérisées en ce que le reste R es substitué au moins une fois en un ou plusieurs sites ou est relié par l'intermédiaire de chaînons de pontage —O—, —S— et/ou —CONH—.

4. Compositions de polyamides à mouler selon au moins l'une des revendications 1 à 3, caractérisées en ce qu'on incorpore come monoisocyanates des monoisocyanates aliphatiques comportant au moins 10 atomes de carbone ou des monoisocyanates aromatiques qui contiennent sur le noyau aromatique au moins un substituant comportant au moins 4 atomes de carbone.

5. Compositions de polyamides à mouler selon l'une au moins des revendications 1 à 4, caractérisées en ce qu'on incorpore comme monoisocyanates des monoisocyanates aromatiques chlorés.

6. Compositions de polyamides à mouler selon l'une au moins des revendications 1 à 4, caractérisées en ce qu'on incorpore comme monoisocyanates des mélanges d'isocyanates d'alkyles à nombre pair d'atomes de carbone en $C_{10}$ à $C_{18}$.

7. Compositions de polyamides à mouler selon l'une quelconque des revendications 1 à 6, caractérisées en ce qu'on incorpore comme monoisocyanates l'isocyanate de dodécyle, l'isocyanate de stéaryle (mélange d'isocyanates d'alkyles en $C_{12}$ à $C_{18}$), des isocyanates de nonylphényle, des isocyanates de dodécylephényle, du (3-isocyanatotolyl)-stéarylamide, des isocyanates, de chlorphényle ou le composé

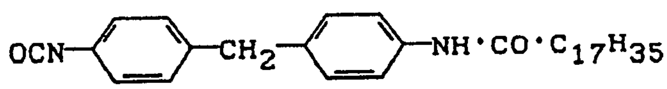

8. Compositions de polyamides à mouler selon l'une au moins des revendications 1 à 7, caractérisées en ce qu'on incorpore 0,5 à 3% en poids de monoisocyanates dans le polyamide.

9. Compositions de polyamides à mouler selon l'une au moins des revendications 1 à 8, caractérisées en ce qu'on utilise come polyamides du polyamide-6, -6,6, -6,9, -6,10, 6,12, -11 et/ou -12 ainsi que des copolyamides.

**Claims**

1. High-impact polyamide moulding compounds readily processable as thermoplastics, obtained by incorporation of 0.5 to 5% by weight, based on the compound as a whole, of at least one monoisocyanate corresponding to general formula (I)

$$R—NCO \qquad (I)$$

or correspondingly masked monoisocyanates in which the isocyanate group is directly attached to the substituted or unsubstituted hydrocarbon radical R containing at least 6 carbon atoms in the polyamide.

2. Polyamide moulding compounds as claimed in claim 1, characterized in that, in general formula (I), R represents a (cyclo)aliphatic $C_{6-50}$ radical, an araliphatic $C_{7-50}$ radical or an aromatic radical.

3. Polyamide moulding compounds as claimed in at least one of claims 1 and 2, characterized in that the radical R is substituted at least once at one or more places or is attached by the bridge members —O—, —S— and/or —CONH—.

4. Polyamide moulding compounds as claimed in at least one of claims 1 and 3, characterized in that aliphatic monoisocyanates containing at least 10 carbon atoms or aromatic monoisocyanates containing at least one substituent containing at least 4 carbon atoms are incorporated as the monoisocyanates.

5. Polyamide moulding compounds as claimed in at least one of claims 1 to 4, characterized in that chlorinated aromatic monoisocyanates are incorporated as the monoisocyanates.

6. Polyamide moulding compounds as claimed in at least one of claims 1 to 4, characterized in that mixtures of even-numbered $C_{10-18}$ alkyl isocyanates are incorporated as the monoisocyanates.

7. Polyamide moulding compounds as claimed in at least one of claims 1 to 6, characterized in that

dodecyl isocyanate, stearyl isocyanate (mixture of $C_{12-18}$ alkyl isocyanates), nonyl phenyl isocyanates, dodecyl phenyl isocyanates, (3-isocyanatotolyl)-stearyl amide, chlorophenyl isocyanates or the compound

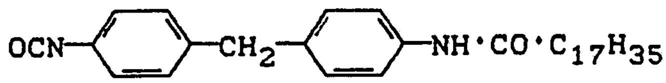

are incorporated as monoisocyanates.

8. Polyamide moulding compounds as claimed in at least one of claims 1 to 7, characterized in that 0.5 to 3% by weight monoisocyanates are incorporated in the polyamide.

9. Polyamide moulding compounds as claimed in at least one of claims 1 to 8, characterized in that polyamide-6, -6,6, -6,9, -6,10, -6,12, -11 and/or -12 and copolyamides are used as the polyamides.